Europäisches Patentamt

European Patent Office

Office européen des brevets

(19)

(11) **EP 1 142 401 B1**

(12) **EUROPÄISCHE PATENTSCHRIFT**

| | |
|---|---|
| (45) Veröffentlichungstag und Bekanntmachung des Hinweises auf die Patenterteilung:<br>**07.09.2005  Patentblatt 2005/36** | (51) Int Cl.⁷: **H04Q 7/38** |
| (21) Anmeldenummer: **00903499.2** | (86) Internationale Anmeldenummer:<br>**PCT/DE2000/000063** |
| (22) Anmeldetag: **10.01.2000** | (87) Internationale Veröffentlichungsnummer:<br>**WO 2000/042802 (20.07.2000 Gazette 2000/29)** |

(54) **VERFAHREN ZUM UMSCHALTEN EINER KOMMUNIKATIONSVERBINDUNG AUF EINEN ANDEREN KANAL (HANDOVER)**

METHOD FOR SWITCHING A COMMUNICATIONS LINK TO ANOTHER CHANNEL (HANDOVER)

PROCEDE POUR LA COMMUTATION D'UNE LIAISON DE COMMUNICATION SUR UNE AUTRE VOIE (TRANSFERT)

| | |
|---|---|
| (84) Benannte Vertragsstaaten:<br>**DE ES FR GB SE** | (72) Erfinder:<br>• **SCHULZ, Egon**<br>  **D-80993 München (DE)**<br>• **SCHINDLER, Jürgen**<br>  **D-10555 Berlin (DE)** |
| (30) Priorität: **13.01.1999  DE 19901004** | |
| (43) Veröffentlichungstag der Anmeldung:<br>**10.10.2001  Patentblatt 2001/41** | (56) Entgegenhaltungen:<br>**WO-A-97/31499          WO-A-99/29133**<br>**US-A- 5 524 009          US-A- 5 870 675** |
| (73) Patentinhaber: **SIEMENS AKTIENGESELLSCHAFT**<br>**80333 München (DE)** | |

**Beschreibung**

Die Erfindung betrifft ein Verfahren zum Umschalten einer Kommunikationsverbindung auf einen anderen Kanal (Handover) in digitalen zellularen Mobilfunksystemen und ein Mobilfunksystem, wobei der Zeitpunkt des Handovers durch einen Entscheidungsalgorithmus bestimmt wird. Der Wechsel auf einen neuen Kanal kann dabei - grob verallgemeinert - zwischen zwei Funksystemen bzw. Frequenzbändern innerhalb eines Funksystems (External Handover), zwischen zwei Funkzellen innerhalb eines zellularen Netzes (Intercell Handover) oder innerhalb einer Funkzelle (Intracell Handover) erfolgen. Je Handover-Fall können wiederum verschiedene Handover-Arten eingeschlossen sein.

Der Beginn der mobilen Telekommunikation war durch eine Vielzahl verschiedener inkompatibler Systeme und Mobilfunknetze geprägt, die meist länder- und herstellerspezifisch angelegt waren. Aus dieser Situation heraus wurde beim Übergang zur volldigitalen Übertragung von Sprache und Signalisierung begonnen, europaweite Standards zu definieren, von denen DECT (Digital European Cordless Telephone) einerseits und GSM (Global System for Mobile Communications) sowie UMTS (Universal Mobile Telecommunication Service) andererseits im weiteren näher verglichen werden sollen.

Grundsätzlich werden bei den benannten Systemen die zu übertragenden Daten in Einheiten zerteilt, sogenannten Sprach- bzw. Datenrahmen, die nacheinander übertragen werden. Die Größe dieser Rahmen und damit die Menge der darin enthaltenen Daten sowie die Behandlung der Daten innerhalb der Rahmen zwecks Erhöhung des Datendurchsatzes und der Datensicherheit (z. B. Interleaving) sind in den einzelnen Standards definiert.

Der DECT-Standard dient der Unterstützung persönlicher quasistatischer Kommunikationsdienste und wird aufgrund seiner Eigenschaften als schnurloses ISDN bezeichnet. DECT ist durch einen nahtlosem Kanalwechsel (Seamless Handover) insbesondere sehr gut für dichten Verkehr geeignet. Der Seamless Handover im DECT-System beruht im wesentlichen darauf, daß ein 32 kbit/s ADPCM (Adaptive Delta Pulse Code Modulation) Speech Codec verwendet wird, der kontinuierlich Daten liefert. Die Sprach- rahmen beim ADPCM Speech Codec entsprechen einer Sprache von der Dauer eines Abtastwertes. Bei einer Abtastrate von beispielsweise 8 kHz entspricht somit ein Rahmen einer Dauer von 125 µs. Ferner werden die codierten Sprachrahmen nicht über mehrere Zeitschlitze verschachtelt (interleaves) übertragen.

GSM ist der erste digitale zellulare Mobilfunkstandard, der mit International Roaming und ISDN-Fähigkeit eine länderübergreifende Mobilität, eine hohe Datensicherheit sowie eine große Datenvielfalt bietet. Weiterführend dazu münden die bestehenden Standards in dem europaweiten universellen Mobilfunkstandard UMTS. Im zukünftigen UTMS-Standard werden zwei Modi vorgeschlagen, nämlich FDD (Frequency Division Duplex) Mode und TDD (Time Division Duplex) Mode. Im FDD-Modus wird ein Übertragungskanal durch die Freiheitsgrade Frequenz und Spreizcode charakterisiert. Es handelt sich hierbei um ein CDMA System (Code Division Multiple Access). Das Prinzip von CDMA besteht darin, Mobilfunkteilnehmer nicht nur durch unterschiedliche Frequenzen, sondern auch Sequenzen von Codes zu unterscheiden. Im TDD-Modus wird ein Übertragungskanal durch die Freiheitsgrade Frequenz, Zeitschlitz und Spreizcode festgelegt. Man spricht beim UMTS TDD Mode von einem TD/CDMA-System.

Im GSM-Standard oder auch im UMTS-System werden Speech Codecs verwendet, die jeweils Sprach- bzw. Datenrahmen mit einer festen Länge von 20 ms verarbeiten. Die Übertragung dieser Rahmen im GSM-Standard oder auch im TDD Mode des UMTS-Systems erfolgt mit dem TDMA (Time Division Multiple Access)-Verfahren, bei dem die Sprach- bzw. Datenrahmen, verteilt auf mehrere Zeitschlitze, die durch die Aufteilung einer Trägerfrequenz auf mehrere Mobilstationen zustande kommen, übertragen werden. Bei einer Zeitschlitzdauer von 10 ms im TDD-Modus wird ein Sprach- bzw. Datenrahmen in zwei aufeinanderfolgenden TDMA-Rahmen übertragen. Im TDD-Modus sind 16 Zeitschlitze in einem TDMA-Rahmen vorgesehen. Um einerseits zufällige Bitfehler (random error) und andererseits burstartige Störungen (burst error) des Mobilfunkkanals korrigieren zu können, werden den zu übertragenden Daten Redundanzen zum Schutz gegen Störungen hinzugefügt. Zusätzlich werden die Daten verschachtelt (interleaved) in zwei Blöcken übertragen, um eine weitere Verbesserung gegenüber Störungen - wie beispielsweise Fading - zu erzielen. Bei einer Verschachtelung werden die Daten nicht in gleicher Reihenfolge weiterübertragen, sondern eine neue zeitliche Sortierung geschaffen, die selbstverständlich empfangsseitig wieder rückgängig gemacht wird.

Auch beim FDD-Modus (CDMA) werden die Daten in verschachtelten Blöcken übertragen.

Der zellulare Aufbau des gesamten Versorgungsgebietes stellt die Forderung, eine Verbindung durch einen nahtlosen Kanalwechsel (Seamless Handover) einer Mobilstation aus dem bisherigen Versorgungsbereich in einen anderen Versorgungsbereich dann herzustellen, wenn dieser eine bessere Übertragungsqualität verspricht. Der Handover ist ein sehr zeitkritischer Vorgang, da die Kontinuität laufender Verbindungen gewährleistet sein muß. Er hat einen wesentlichen Einfluß auf die Kapazität und die Leistungsfähigkeit zellularer Netze und besteht aus den drei Phasen: Messung, Handover-Einleitung, Umschaltung zur Zielbasisstation. Die ständigen Messungen haben den Zweck, die Notwendigkeit eines Handovers zu erkennen. Ein Handover-Algorithmus macht die Entscheidung, ob und wann ein Wechsel des Übertragungskanals erforderlich bzw. sinnvoll ist, von verschiedenen Kriterien abhängig, wie Empfangsleistung, Bitfehlerraten, Störabstände und Entfernung von der momentanen Basisstation.

Hat der Handover-Algorithmus eine Handover-Entscheidung getroffen, werden im Netz die notwendigen Vorbereitungen getroffen, insbesondere werden die Festnetzverbindung von der Mobilvermittlungsstelle zur neuen Basisstation durchgeschaltet und ein neuer, geeigneter Übertragungskanal ausgewählt. Weitere Aktionen bezüglich Teilnehmer- bzw. Mobilitätsverwaltung können hinzukommen, bevor in einer dritten Phase die endgültige Kanalumschaltung ohne Rücksicht auf die Verschachtelung der Übertragungsdaten erfolgt. Damit besteht die Möglichkeit, daß auf dem alten Übertragungskanal nicht der vollständige Sprachrahmen empfangen wurde und auf dem neuen Übertragungskanal nur ein Teil des ersten Sprachrahmens empfangen wird, zum Beispiel im UMTS TDD-Modus nur der zweite Block des Sprachrahmens. Infolge des Interleavings entsteht damit im ungünstigsten Fall für beide Sprachrahmen eine Bitfehlerrate von mindestens 50%, die bedingt, daß selbst durch eingefügte Redundanzen eine Reparatur unmöglich wird. Damit sind zwei aufeinanderfolgende Sprachrahmen unbrauchbar, wodurch die Qualität der Sprachverbindung sinkt, da mindestens 40 ms Sprache fehlen. Dieser Verlust ist deutlich spürbar.

Die gleichen Probleme treten bei der Übertragung von Paketdaten im Packet Mode auf oder bei der Übertragung von Daten mit hohen Interleavertiefen. Wird ein in sich abgeschlossenes Datenpaket aufgrund eines Handover nicht vollständig übertragen, gehen wichtige darin enthaltene Informationen einer größeren Datei verloren.

Der Erfindung liegt die Aufgabe zugrunde, die beschriebenen Störungen, verstärkt durch die Verschachtelung der Daten, beim Kanalwechsel zu verringern.

Die Aufgabe wird durch Verfahren mit den Merkmalen der unabhängigen Ansprüche 1 und 11 gelöst. Vorteilhafte Weiterbildungen der Erfindung geben die abhängigen Ansprüche 2 bis 10 an.

Danach wird erfindungsgemäß ein Kanalwechsel (Handover) erst nach der Übertragung eines vollständigen Sprach- bzw. Datenrahmens unter Berücksichtigung der Interleaver-Tiefe vorgenommen, wodurch die oben beschriebenen Datenverluste bei den aktuell verwendeten Handover-Verfahren sicher vermieden werden. Unter Kanalwechsel ist nicht nur der Wechsel innerhalb einer Zelle oder der Wechsel zwischen zwei Zellen eines zellularen Netzes zu verstehen, sondern auch der Wechsel von einem System in ein anderes System, wie zum Beispiel von UMTS-TDD zu UMTS-FDD oder zu GSM oder intern bei einem Wechsel von einer Frequenz auf eine andere Frequenz.

Der Zeitpunkt des Kanalwechselns wird letztlich von einer Einrichtung bestimmt, die im Netzwerk und/oder in der Mobilstation realisiert ist. Die Bestimmung erfolgt zusätzlich aufgrund der Kenntnis der Verschachtelung der Übertragungsdaten.

Bei Datenübertragungen (Sprache, FAX, MODEM) in TDMA-Systemen erfolgt der Handover erst nach Übertragung eines TDMA-Rahmens mit einer TDMA-Rahmennummer, die der Bedingung: (TDMA-Rahmennummer - Start-TDMA-Rahmennummer + 1) modulo Interleaver-Tiefe = 0 genügt.

Bei Sprachverbindungen bedeutet das, daß der erste Block des Sprachrahmens in einem ungeradzahligen TDMA-Rahmen und der zweite Block des Sprachrahmens in einem geradzahligen TDMA-Rahmen übertragen werden und damit der Handover ausschließlich nach Übertragung eines geradzahligen TDMA-Rahmens durchgeführt wird.

Es kann aber auch bei einer Übertragung eines Sprachrahmens über n (n = ganz, geradzahlig) Zeitschlitze der erste Datenblock des Sprachrahmens in einem geradzahligen TDMA-Rahmen und der zweite Datenblock des Sprachrahmens in einem ungeradzahligen TDMA-Rahmen übertragen werden und damit der Handover ausschließlich nach Übertragung eines ungeradzahligen TDMA-Rahmens durchgeführt werden.

Die zu berücksichtigende Interleavertiefe für ein Handover läßt sich in vorteilhafter Weiterbildung durch Flags markieren, wobei beispielsweise jedem Dienst (Sprachdienst, Datendienste) ein eigenes Flag zugeordnet sein kann. Die Mobilstation erhält diese Informationen über den Organisationskanal für die Übertragung allgemeiner Daten (CCH ($D_m$), speziell über den logischen Kanal Broadcast Control Channel (BCCH), einem Traffic Channel (TCH) assoziierten Common Control Channel (CCCH) oder durch eine Inband-Signalisierung im Dedicated Control Channel (DCCH).

Das Verfahren läßt sich in analoger Anwendung auch auf die Übertragung von Paketdaten (Paket Data) anwenden, indem ein Handover erst durchgeführt wird, wenn eine Packet Data Unit (PDU) oder ein in sich abgeschlossenes Paket vollständig übertragen worden ist.

Die Erfindung und ihre Vorteile sollen anhand eines Ausführungsbeispiels näher erläutert werden. Die zugehörige Zeichnung zeigt in:

Fig. 1 ein Schichtenmodell einer Sprachübertragung im digitalen Mobilfunk,

Fig. 2 einen Ausschnitt nach dem Schichtenmodell nach Fig. 1 mit Beispielwerten einer Übertragung bei einem Handover nach dem Stande der Technik und

Fig. 3 einen Ausschnitt nach dem Schichtenmodell nach Fig. 1 mit Beispielwerten einer Übertragung bei einem erfindungsgemäßen Handover.

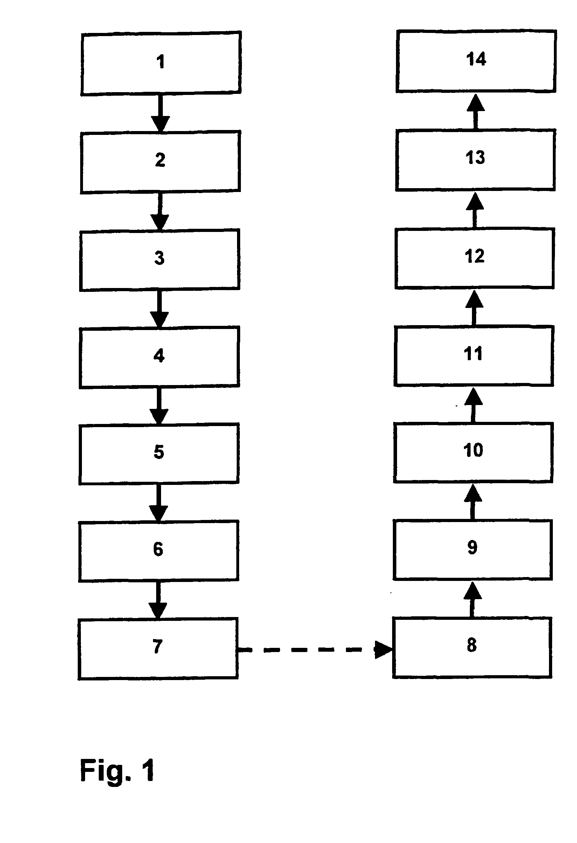

Das in Figur 1 dargestellte schematisierte Schichtenmodell für eine Sprachübertragung in einem digitalen Mobilfunknetz zeigt die einzelnen Verarbeitungsschritte von der Spracheingabe bis zur Wiedergabe. Zunächst wird die Sprache 1 in 2 digitalisiert, in 3 erfolgt die Kanalkodierung, in 4 das Interleaving, in 5 die Burstformatierung, in 6 die Verschlüsselung und in 7 die Modulation der binären Daten auf das Trägersignal. Nach Übertragung der Daten an einen Empfänger über eine Funkschnittstelle erfolgt in 8 die Demodulation, in 9 werden die Daten entschlüsselt, in 10 die Burstinformationen aus 5 ausgewertet, in 11 werden die verschachtelten Daten in die richtige Ausgangsreihenfolge sortiert, in 12 erfolgt die Kanaldekodierung und schließlich in 13 die Umwandlung der digitalen Signale in die übertragenen Sprachinformationen 14.

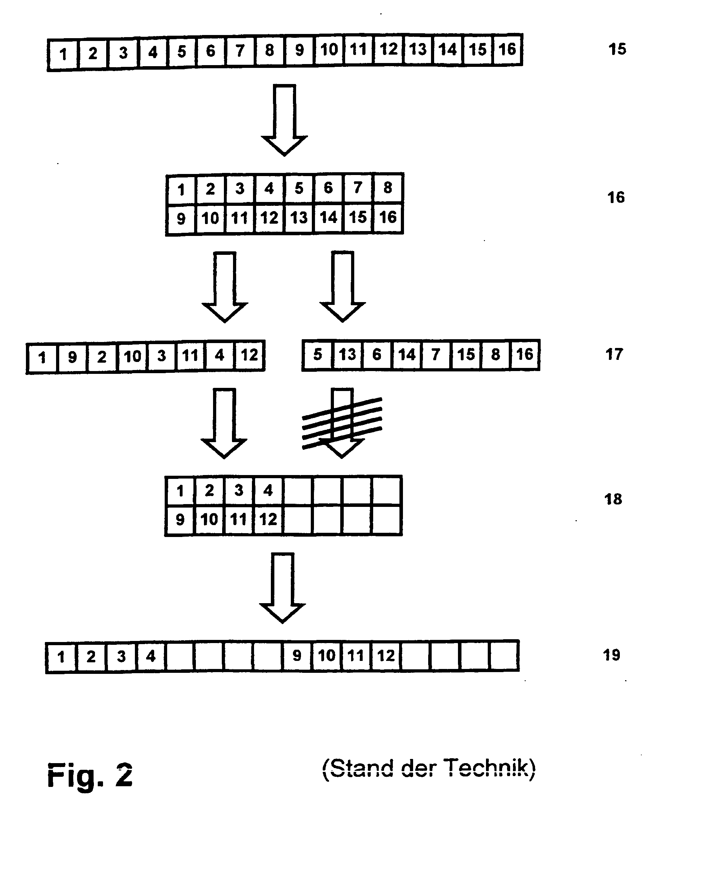

Fig. 2 zeigt beispielhaft einen Sprachrahmen 15, wie er nach der Kanalkodierung in 3 vorliegt. Der Sprachrahmen 15 wird mittels einer Interleaving-Matrix 16, die durch zeilenweises Einschreiben des Sprachrahmens 15 gebildet wird, in zwei TDMA-Rahmen 17 so zerlegt, daß eventuelle Bitfehler verteilt werden und damit die Möglichkeit einer Fehlerreparatur steigt. Angenommen, das Handover erfolgt bereits nach der Übertragung des ersten TDMA-Rahmens aus 17, so daß der zweite TDMA-Rahmen fehlt, entstehen bei der Rekonstruktion der Interleavingmatrix auf der Empfängerseite 18 ab der Stelle, an der das Handover erfolgte, Datenverluste, die in dem empfangenen Sprachrahmen 19 nicht repariert werden können. Dieser Sprachrahmen ist somit unbrauchbar, die darin enthaltenen Informationen sind verloren. Dies gilt selbstverständlich auch für den Fall, daß nur der zweite TDMA-Rahmen übertragen wird.

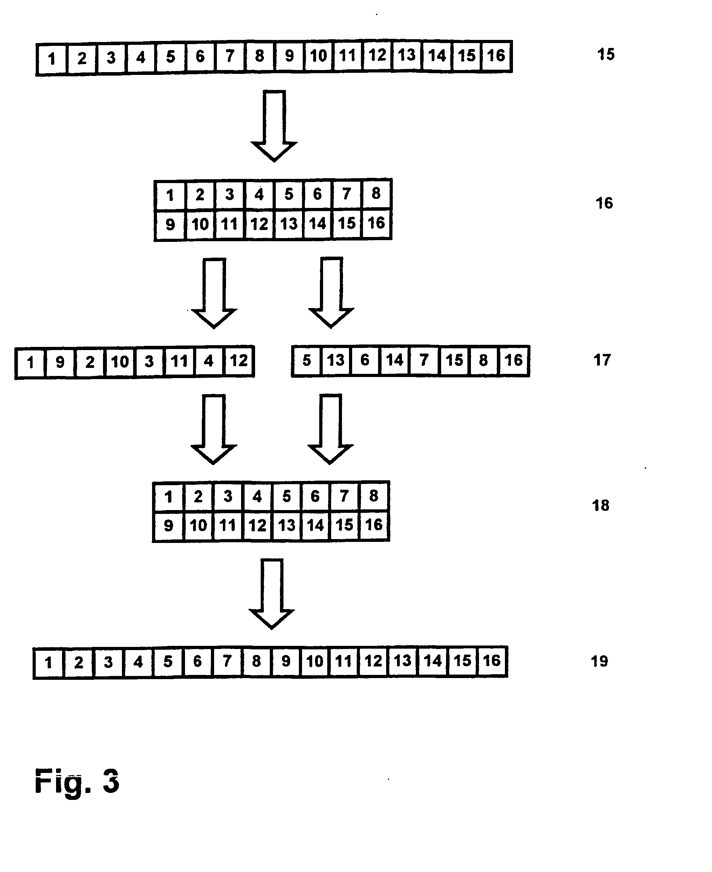

Nach Fig. 3 erfolgt ein Handover stets nach der Übertragung des gesamten Sprachrahmens, im Beispiel also nach der Ubertragung beider TDMA-Rahmen 17, so daß die in Fig. 2 gezeigten Datenverluste nicht mehr auftreten können und der empfangene Sprachrahmen 18 die Daten vollständig enthält. Da Sprachrahmen immer eine bestimmte Länge haben und damit beispielsweise bei 8 kbit/s Sprache und einer Dauer von 20ms immer eine Nettodatenrate von 160 Bits besteht, ist das Ende eines Sprachrahmens leicht abzuzählen.

Dies trifft in gleicher Weise für das Ende vollständiger Datenpakete oder Datensegmente zu, die immer in einer bestimmten Größe, z. B. 800 Bits bei Datenpaketen, übertragen werden. Die Größe selbst kann allerdings abhängig von der Datenrate des Packet Data Services (datenrate) variieren.

Auch im FDD-Modus des CDMA-Systems, bei dem die Daten ebenfalls in verschachtelten Blöcken übertragen werden, ist die Erfindung sehr gut einsetzbar. Ein Handover wird sinnvollerweise erst nach Erhalt eines vollständigen Sprach- bzw. Datenrahmens durchgeführt und nicht schon innerhalb eines Sprach- bzw. Datenrahmens.

**Patentansprüche**

1. Verfahren zum Umschalten einer Kommunikationsverbindung auf einen anderen Kanal innerhalb oder zwischen digitalen zellularen Mobilfunksystemen bestehend aus einem Netzwerk und Mobilstationen, in denen die zu übertragenden Daten von Sprach- oder Datenrahmen in Blöcke gleicher Länge zerteilt und verschachtelt werden, und wobei der Zeitpunkt des Kanalwechsels durch einen Entscheidungsalgorithmus bestimmt wird,
   **dadurch gekennzeichnet,**
   **daß** der Kanalwechsel erst nach der Übertragung eines vollständigen Sprach- oder Datenrahmens erfolgt.

2. Verfahren nach Anspruch 1,
   **dadurch gekennzeichnet,**
   **daß** der Kanalwechsel unter Berücksichtigung der Interleaver-Tiefe durchgeführt wird.

3. Verfahren nach Anspruch 1,
   **dadurch gekennzeichnet,**
   **daß** der Zeitpunkt des Kanalwechselns vom Netzwerk aufgrund der Kenntnis der Verschachtelung der Übertragungsdaten bestimmt wird.

4. Verfahren nach Anspruch 1,
   **dadurch gekennzeichnet,**
   **daß** der Zeitpunkt des Kanalwechselns von der Mobilstation aufgrund der Kenntnis der Verschachtelung der Übertragungsdaten bestimmt wird.

5. Verfahren nach Anspruch 1,
   **dadurch gekennzeichnet,**
   **daß** bei Datenübertragungen in TDMA-Systemen der Kanalwechsel erst nach Übertragung eines TDMA-Rahmens mit einer TDMA-Rahmennummer erfolgt, die der Bedingung:

   (TDMA-Rahmennummer - Start-TDMA-Rahmennummer + 1) modulo Interleaver-Tiefe = 0 genügt.

6. Verfahren nach Anspruch 1,

**dadurch gekennzeichnet, daß** bei Sprachverbindungen der erste Datenblock des Sprachrahmens in einem ungeradzahligen TDMA-Rahmen und der zweite Datenblock des Sprachrahmens in einem geradzahligen TDMA-Rahmen übertragen werden und damit der Handover ausschließlich nach Übertragung eines geradzahligen TDMA-Rahmens durchgeführt wird.

**7.** Verfahren nach Anspruch 1,
**dadurch gekennzeichnet,**
**daß** bei einer Übertragung eines Sprach- bzw. Datenrahmens über n (n = ganz, geradzahlig) Zeitschlitze der erste Block des Sprachrahmens in einem geradzahligen TDMA-Rahmen und der zweite Block des Sprach- bzw. Datenrahmens in einem ungeradzahligen TDMA-Rahmen übertragen werden und damit der Handover ausschließlich nach Übertragung eines ungeradzahligen TDMA-Rahmens durchgeführt wird.

**8.** Verfahren nach Anspruch 2,
**dadurch gekennzeichnet,**
**daß** ein Flag die beim Handover zu berücksichtigende Interleavertiefe markiert.

**9.** Verfahren nach Anspruch 8,
**dadurch gekennzeichnet,**
**daß** für jeden Dienst ein Flag gesetzt ist, der die zu berücksichtigende Interleavertiefe angibt.

**10.** Verfahren nach Anspruch 1,
**dadurch gekennzeichnet,**
**daß** bei Datenübertragungen in CDMA-Systemen der Handover erst nach Übertragung eines vollständigen Sprach- bzw. Datenrahmens erfolgt.

**11.** Digitales zellulares Mobilfunksystem bestehend aus einem Netzwerk und Mobilstationen, mit einer Einrichtung zum Umschalten einer Kommunikationsverbindung auf einen anderen Kanal , die einen Entscheidungsalgorithmus bezüglich des Zeitpunkts des Kanalwechsels benutzt, wobei der Kanalwechsel erst nach der Übertragung eines vollständigen Sprach- oder Datenrahmens erfolgt und wobei die zu übertragenden Daten von Sprach- oder Datenrahmen in Blöcke gleicher Länge zerteilt und verschachtelt sind.

**Claims**

**1.** Method for switching a communications link to another channel within or between digital cellular mobile radio systems consisting of a network and mobile stations, in which the data of voice or data frames to be transmitted are split into blocks of equal length and are interleaved, and where the time of handover is determined by a decision algorithm, **characterized in that** the handover only takes place after a complete voice or data frame has been transmitted.

**2.** Method according to Claim 1, **characterized in that** the handover is carried out taking into consideration the interleaving depth.

**3.** Method according to Claim 1, **characterized in that** the time of handover is determined by the network on the basis of the knowledge of the interleaving of the transmission data.

**4.** Method according to Claim 1, **characterized in that** the time of handover is determined by the mobile station on the basis of the knowledge of the interleaving of the transmission data.

**5.** Method according to Claim 1, **characterized in that** in the case of data transmissions in TDMA systems, handover only takes place after transmission of a TDMA frame with a TDMA frame number that meets the condition:

(TDMA frame number - starting TDMA frame number + 1)

modulo interleaving depth = 0.

**6.** Method according to Claim 1, **characterized in that** in the case of voice links, the first data block of the voice frame is transmitted in an odd-numbered TDMA frame and the second data block of the voice frame is transmitted in an even-numbered TDMA frame and the handover is thus performed exclusively after an even-numbered TDMA frame has been transmitted.

**7.** Method according to Claim 1, **characterized in that** in the case of a transmission of a voice or data frame over n (n = integral, even-numbered) time slots, the first block of the voice frame is transmitted in an even-numbered TDMA frame and the second block of the voice or data frame is transmitted in an odd-numbered TDMA frame and the handover is thus performed exclusively after an odd-numbered TDMA frame has been transmitted.

**8.** Method according to Claim 2, **characterized in that** a flag marks the interleaving depth to be taken into consideration in the handover.

**9.** Method according to Claim 8, **characterized in that** a flag specifying the interleaving depth to be taken into consideration is set for each service.

**10.** Method according to Claim 1, **characterized in that** in the case of data transmissions in CDMA systems, the handover only takes place after a complete voice or data frame has been transmitted.

**11.** Digital cellular mobile radio system consisting of a network and mobile stations, comprising a device for switching a communications link to another channel which uses a decision algorithm with respect to the time of handover, the handover only taking place after a complete voice or data frame has been transmitted and where the data of voice or data frames to be transmitted are split into blocks of equal length and are interleaved.

**Revendications**

**1.** Procédé pour la commutation d'une liaison de communication sur une autre voie à l'intérieur ou entre des systèmes radio mobile cellulaires numériques comprenant un réseau et des stations mobiles, dans lesquels les données à transmettre sont subdivisées en blocs de longueur identique et entrelacées par des trames vocales ou de données, le moment du changement de voie étant déterminé par un algorithme de décision,
**caractérisé en ce que**
le changement de voie n'intervient qu'après la transmission d'une trame vocale ou de données complète.

**2.** Procédé selon la revendication 1,
**caractérisé en ce que**,
le changement de voie est effectué en tenant compte de la profondeur de l'entrelaceur.

**3.** Procédé selon la revendication 1,
**caractérisé en ce que**,
le moment du changement de voie est déterminé par le réseau sur la base de la connaissance de l'entrelacement des données de transmission.

**4.** Procédé selon la revendication 1,
**caractérisé en ce que**,
le moment du changement de voie est déterminé par la station mobile sur la base de la connaissance de l'entrelacement des données de transmission.

**5.** Procédé selon la revendication 1,
**caractérisé en ce que**,
dans le cas de transmissions de données dans des systèmes TDMA, le changement de voie n'intervient qu'après la transmission d'une trame TDMA avec un numéro de trame TDMA qui répond à la condition :

$$(\text{numéro de trame TDMA - numéro de trame TDMA de démarrage} + 1)$$

$$\text{modulo profondeur d'entrelaceur} = 0.$$

**6.** Procédé selon la revendication 1,

**caractérisé en ce que**,

dans le cas de liaisons vocales, le premier bloc de données de la trame vocale et le second bloc de données de la trame vocale sont transmis respectivement dans une trame TDMA impaire et dans une trame TDMA paire et la commutation est effectuée de ce fait exclusivement après la transmission d'une trame TDMA paire.

7. Procédé selon la revendication 1,
**caractérisé en ce que**,
lors d'une transmission d'une trame vocale ou de données sur n créneaux temporels (n = nombre entier et pair), le premier bloc de la trame vocale et le second bloc de la trame vocale ou de données sont transmis respectivement dans une trame TDMA paire et dans une trame TDMA impaire et la commutation est effectuée de ce fait exclusivement après la transmission d'une trame TDMA impaire.

8. Procédé selon la revendication 2,
**caractérisé en ce que**,
un indicateur repère la profondeur d'entrelaceur à prendre en compte lors de la commutation.

9. Procédé selon la revendication 8,
**caractérisé en ce que**,
un indicateur, qui indique la profondeur d'entrelaceur à prendre en compte, est placé pour chaque service.

10. Procédé selon la revendication 1,
**caractérisé en ce que**,
en cas de transmissions de données dans des systèmes CDMA, la commutation intervient seulement après la transmission d'une trame vocale ou de données complète.

11. Système radio mobile cellulaire numérique comprenant un réseau et des stations mobiles, avec un dispositif pour la commutation d'une liaison de communication sur une autre voie, qui utilise un algorithme de décision concernant l'instant du changement de voie, le changement de voie intervenant seulement après la transmission d'une trame vocale ou de données complète et les données à transmettre étant subdivisées en blocs de longueur identique et entrelacées par des trames vocales ou de données.

Fig. 1

| 1 | 2 | 3 | 4 | 5 | 6 | 7 | 8 | 9 | 10 | 11 | 12 | 13 | 14 | 15 | 16 |
15

| 1 | 2 | 3 | 4 | 5 | 6 | 7 | 8 |
| 9 | 10 | 11 | 12 | 13 | 14 | 15 | 16 |
16

| 1 | 9 | 2 | 10 | 3 | 11 | 4 | 12 |    | 5 | 13 | 6 | 14 | 7 | 15 | 8 | 16 |
17

| 1 | 2 | 3 | 4 |   |   |   |   |
| 9 | 10 | 11 | 12 |   |   |   |   |
18

| 1 | 2 | 3 | 4 |   |   |   | 9 | 10 | 11 | 12 |   |   |   |   |
19

# Fig. 2          (Stand der Technik)

**Fig. 3**